# EUROPEAN PATENT APPLICATION

(11) **EP 4 776 452 A1**
(43) Date of publication of application: **15.07.2026**
(21) Application number: 26150216.5
(22) Date of filing: 05.01.2026
(51) Int. Cl.: H02G 3/32

(54) **HOLDER AND ELECTRONIC COMPONENT**

(30) Priority: 10.01.2025 CN 202510041616
(71) Applicant: Alps Alpine Co., Ltd., Ota-ku, Tokyo 145-8501 (JP)
(72) Inventor: Zhuang, Changlong, Jinzhou District, Dalian (CN); Wang, Ruomeng, Jinzhou District, Dalian (CN); Jiajun, Han, Jinzhou District, Dalian (CN); Xiaolin, Lin, Jinzhou District, Dalian (CN); Hou, Zhentao, Jinzhou District, Dalian (CN); Tang, Jun, Jinzhou District, Dalian (CN)
(74) Representative: Schmitt-Nilson Schraud Waibel Wohlfrom Patentanwälte Partnerschaft mbB

(57) **Abstract**

A holder and an electronic component are provided. The holder is formed of an elastic material and is configured to hold an object. The holder includes a first surface configured to mount the holder onto a mounting surface of a member; and a second surface opposite the first surface. At least one groove configured to hold the object is formed on the second surface. The holder is configured such that a size of an opening of the groove on the second surface becomes smaller, as the first surface deforms.

## Description

The present disclosure claims priority under 35 U.S.C. §119 to Chinese Application No. 202510041616.1 filed on January 10, 2025, the entire contents of which are incorporated herein by reference.

The present disclosure relates to a holder and an electronic component equipped with the holder.

In conventional technologies, holders for holding objects such as cables have a groove formed on a surface thereof. In such holders, the opening width of the groove is smaller than the diameter of the cable, so that the cable is inserted into the groove and is held by the groove.

However, in such holders, when vibration occurs, the opening of the groove may deform instantaneously due to the vibration, causing a decrease in a holding force on the cable, and the cable or other object may fall out of the groove. Thus, the holder cannot reliably hold the cable or other object, which may lead to cable movement, cable breakage, or defect of a device equipped with the holder, such as noise, malfunction, or even damage.

In view of the problem of conventional technologies, an object of the embodiments of the present disclosure is to provide a holder and an electronic component equipped with the holder, which can reliably hold an object.

The present disclosure relates to a holder and electronic component according to the appended claims. Embodiments are disclosed in the dependent claims. According to a first aspect of the present disclosure, a holder is provided. The holder is formed of an elastic material and is configured to hold an object. The holder includes a first surface configured to mount the holder onto a mounting surface of a member; and a second surface opposite the first surface. At least one groove configured to hold the object is formed on the second surface. The holder is configured such that a size of an opening of the groove on the second surface becomes smaller, as the first surface deforms.

In the first aspect of the present disclosure, the first surface may deform after the first surface is attached on the mounting surface of the member compared to before the first surface is attached on the mounting surface.

In the first aspect of the present disclosure, the size of the opening of the groove on the second surface may become smaller than a width of the object, as the first surface deforms after the first surface is attached on the mounting surface of the member compared to before the first surface is attached on the mounting surface.

In the first aspect of the present disclosure, the first surface may be a concave surface, and curvature of the first surface may become smaller after the first surface is attached on the mounting surface compared to before the first surface is attached on the mounting surface.

In the first aspect of the present disclosure, the groove may include a first groove; and a second groove communicating with the first groove, being located between the first groove and the first surface, and being configured to accommodate the object held by the holder.

In the first aspect of the present disclosure, a width of the second groove may be greater than or equal to a width of the first groove.

In the first aspect of the present disclosure, a width of the second groove may be greater than or equal to a width of the first groove, and the width of the second groove may be greater than or equal to a width of the object.

In the first aspect of the present disclosure, the width of the first groove may be less than the width of the object.

In the first aspect of the present disclosure, the at least one groove may include two or more grooves provided on the second surface, and widths of the two or more grooves may be different.

According to a second aspect of the present disclosure, an electronic component is provided. The electronic component includes the holder according to the first aspect of the present disclosure; and the member having the mounting surface on which the holder is mounted.

### BRIEF DESCRIPTION OF THE DRAWINGS

FIG. 1A is a perspective view showing a holder according to one or more embodiments of the present disclosure.
FIG. 1B is a front view showing the holder according to the one or more embodiments of the present disclosure.
FIG. 2A is a perspective view showing the holder mounted on a member while holding an object according to the one or more embodiments of the present disclosure.
FIG. 2B is a front view showing the holder mounted on the member while holding the object according to the one or more embodiments of the present disclosure.
FIG. 3A is a perspective view showing a holder according to the one or more embodiments of the present disclosure.
FIG. 3B is a front view showing the holder according to the one or more embodiments of the present disclosure.
FIG. 4A is a perspective view showing the holder mounted on a member while holding an object according to the one or more embodiments of the present disclosure.
FIG. 4B is a front view showing the holder mounted on the member while holding the object according to the one or more embodiments of the present disclosure.
FIG. 5A is a perspective view showing a holder mounted on a member while holding an object according to the one or more embodiments of the present disclosure.
FIG. 5B is a front view showing the holder mounted on the member while holding the object according to the one or more embodiments of the present disclosure.
FIG. 6A is a perspective view showing a holder and a member according to the one or more embodiments of the present disclosure.
FIG. 6B is a front view showing a holder and a member according to the one or more embodiments of the present disclosure.
FIG. 7A is a perspective view showing a holder according to the one or more embodiments of the present disclosure.
FIG. 7B is a front view showing the holder according to the one or more embodiments of the present disclosure.
FIG. 8A is a perspective view showing a holder according to the one or more embodiments of the present disclosure.
FIG. 8B is a front view showing the holder according to the one or more embodiments of the present disclosure.
FIG. 9A is a perspective view showing a holder according to the one or more embodiments of the present disclosure.
FIG. 9B is a front view showing the holder according to the one or more embodiments of the present disclosure.
FIG. 10A is a perspective view showing a holder according to the one or more embodiments of the present disclosure.
FIG. 10B is a front view showing the holder according to the one or more embodiments of the present disclosure.
FIG. 11A is a perspective view showing a holder according to the one or more embodiments of the present disclosure.
FIG. 11B is a front view showing the holder according to the one or more embodiments of the present disclosure.
FIG. 12A is a perspective view showing a holder according to the one or more embodiments of the present disclosure.
FIG. 12B is a front view showing the holder according to the one or more embodiments of the present disclosure.

In the following, embodiments of the present disclosure will be described with reference to the accompanying drawings.

Furthermore, in the specification and drawings, only components related to the technical concept of the present disclosure will be described and shown, while other components will be omitted.

Furthermore, in the specification and drawings, components with the same or similar functions are labeled with the same reference numerals, and repetitive descriptions are appropriately omitted.

Furthermore, in the specification and drawings, for clarity, the lengths, widths, thicknesses, etc., in the drawings are merely illustrative and not intended to limit the scope of the disclosure.

Furthermore, the shapes, geometric conditions, and physical characteristics used in the specification, as well as terms determining their degree such as "same" or "identical" and values of dimensions and physical characteristics, are not strictly defined, and are interpreted to include the range to which the same function can be expected.

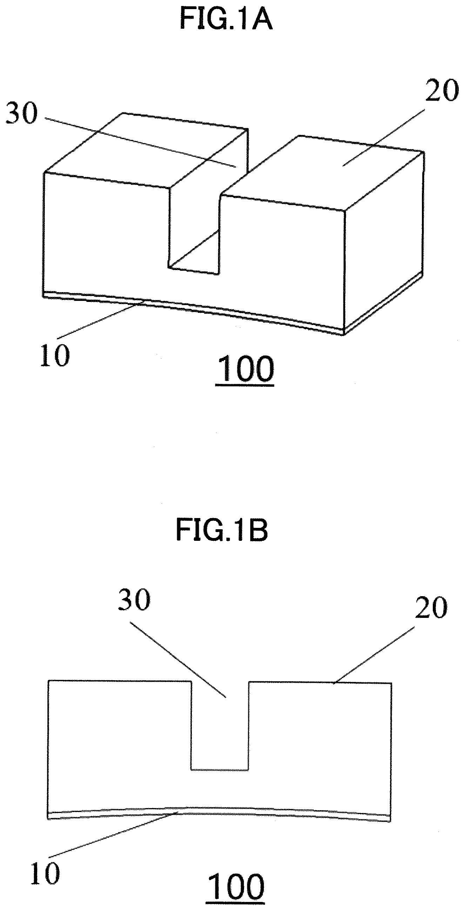

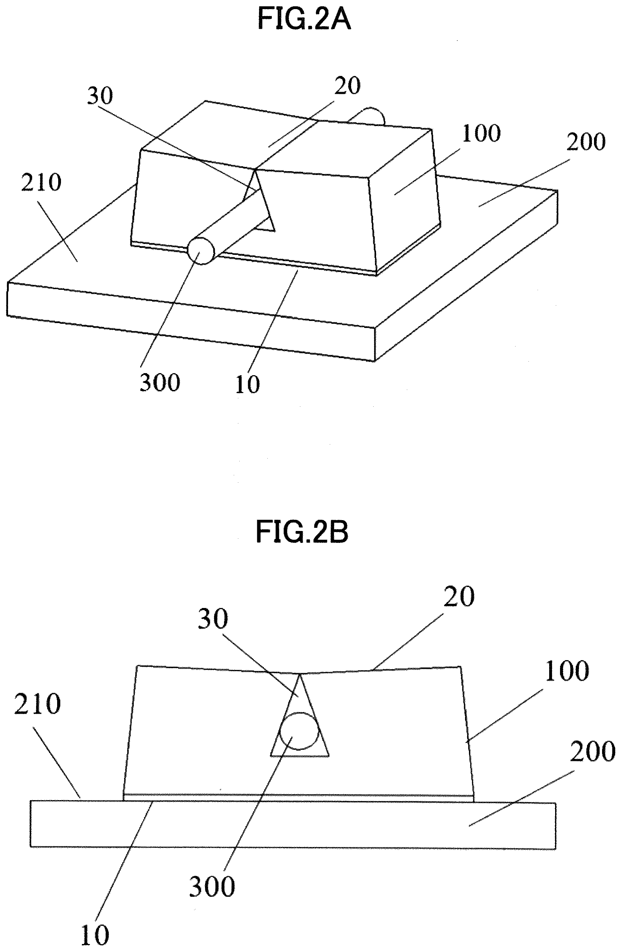

Hereinafter, referring to FIGs. 1A to 2B, a holder according to an embodiment of present disclosure and a case where the holder is mounted on a member while holding an object will be described. FIG. 1A is a perspective view showing a holder 100 according to an embodiment of the present disclosure. FIG. 1B is a front view showing the holder 100 according to the embodiment of the present disclosure. FIG. 2A is a perspective view showing the holder 100 mounted on a member 200 while holding a cable 300, which is the object being held, according to the embodiment of the present disclosure. FIG. 2B is a front view showing the holder 100 mounted on the member 200 while holding the cable 300, which is the object being held, according to the embodiment of the present disclosure.

Note that, in FIG. 1B, a left-right direction of the paper is defined as a longitudinal direction of the holder 100, a depth direction of the paper is defined as a width direction of the holder 100, and an up-down direction of the paper is defined as a height direction of the holder 100. Similarly, in other views of the holder 100, the longitudinal direction, the width direction, and the height direction are also defined according to this manner in FIG. 1B. Note that the longitudinal direction, the width direction, and the height direction are schematic for ease of explanation and are not intended to limit the present disclosure. For example, the length of the holder 100 in the width direction may also be greater than the length of the holder 100 in the longitudinal direction.

As shown in FIGs. 1A and 1B, the holder 100 of the embodiment of present disclosure is formed of, for example, an elastic material, and is configured to hold the object. Here, the elastic material may be, for example, rubber, resin, metal, or any material capable of elastic deformation.

Furthermore, as shown in FIGs. 1A to 2B, the holder 100 of the embodiment of present disclosure includes a first surface 10 configured to mount the holder 100 onto a mounting surface 210 of the member 200, and a second surface 20 opposite the first surface 10. Here, as shown in FIGs. 1A and 1B, the first surface 10 is, for example, a concave surface, and the second surface is a flat surface. Furthermore, a groove 30 configured to hold the cable 300, which is the object being held, is formed on the second surface 20 of the holder 100. The groove 30 is formed along the width direction of the holder 100 on the second surface 20. Furthermore, the groove 30 does not penetrate the holder 100 in the height direction. In other words, the groove 30 is configured to open on the second surface 20, extend along the height direction inside the holder 100, and have a bottom inside the holder 100.

Furthermore, in the embodiment, the holder 100 is configured such that a size of an opening of the groove 30 on the second surface 20 becomes smaller, as the first surface 10 deforms.

For example, FIGs. 1A and 1B show the state of the holder 100 before the first surface 10 of the holder 100 is attached on the mounting surface 210 of the member 200, i.e., the holder 100 itself. FIGs. 2A and 2B show the state of the holder 100 after the first surface 10 of the holder 100 is attached on the mounting surface 210 of the member 200, while the cable 300, which is the object being held, is held in the groove 30 of the holder 100.

As shown in FIGs. 2A and 2B, the mounting surface 210 of the member 200 is a flat surface. Therefore, when the first surface 10 of the holder 100 formed of the elastic material is attached on the mounting surface 210 of the member 200, which is the flat surface, the first surface 10, which is the concave surface, deforms, thereby deforming into a flat surface to tightly adhere to the mounting surface 210 of the member 200.

Furthermore, as shown in FIGs. 2A and 2B, with the deformation of the first surface 10, the size of the opening of the groove 30 on the second surface 20 of the holder 100 becomes smaller. In this way, the size of the groove 30 of the holder 100 made of the elastic material becomes smaller, thereby generating an elastic compressive force on the cable 300 as a holding force.

Furthermore, after attaching the first surface 10 of the holder 100 on the mounting surface 210 of the member 200, the first surface 10 deforms, compared to before attaching the first surface 10 on the mounting surface 210, so that the size of the opening of the groove 30 on the second surface 20 becomes smaller than a width of the cable, which is the object being held. For example, after attaching the first surface 10 of the holder 100 on the mounting surface 210 of the member 200, compared to before attaching the first surface 10 on the mounting surface 210, the deformation of the first surface 10 causes the opening size of the groove 30 on the second surface 20 to decrease to zero, namely, the opening is closed. As a result, the groove 30 of the holder 100 made of elastic material becomes smaller than the width of the cable 300 being held, thereby not only generating the elastic compressive force on the cable 300 as the holding force, but also physically blocking a path of the cable 300 falling out of the groove 30.

Thus, by the holder 100 according to the embodiment, even when vibration occurs, the holder 100 can reliably hold the cable 300 through the elastic compressive force generated by the decreased groove 30. As a result, it is possible to prevent the cable 300 or other held object from falling out of the groove 30, thereby effectively preventing cable movement, cable breakage, or defect of a device equipped with the holder, such as noise, malfunction, or even damage.

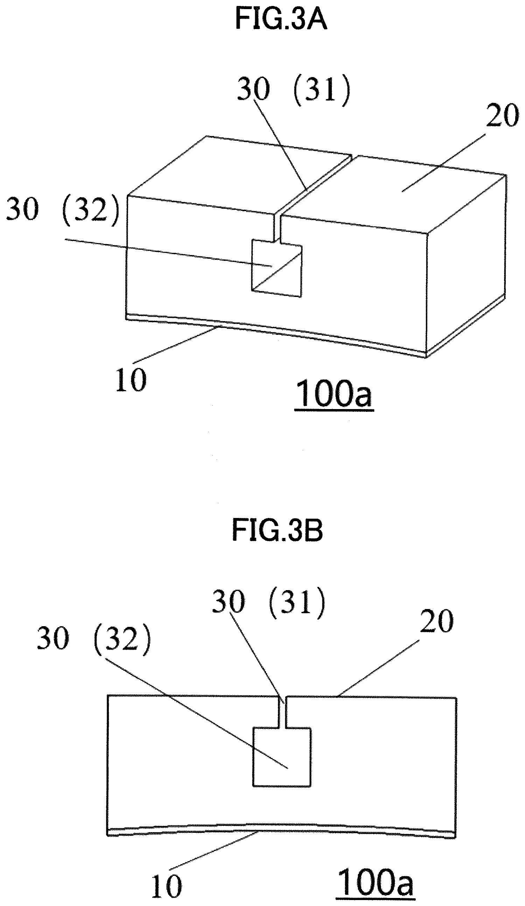

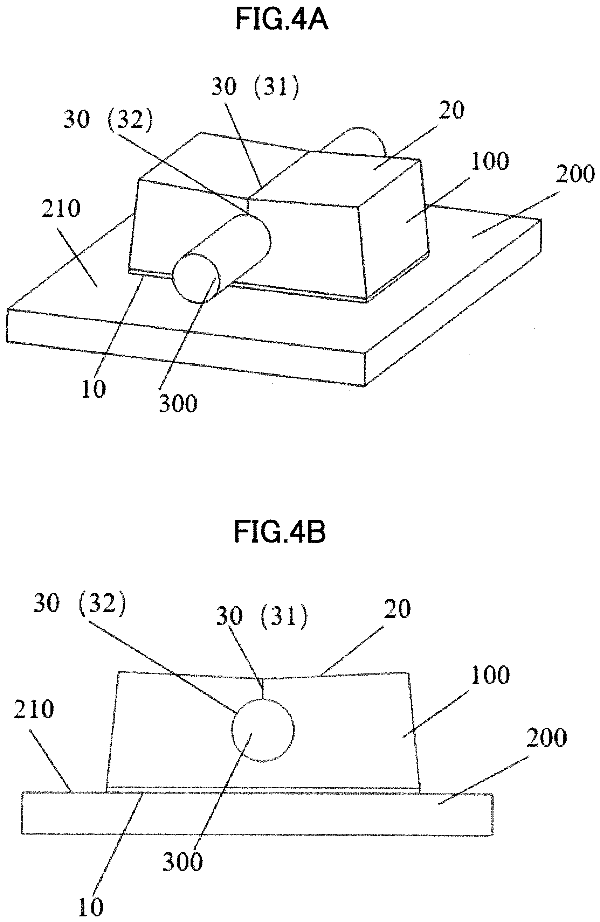

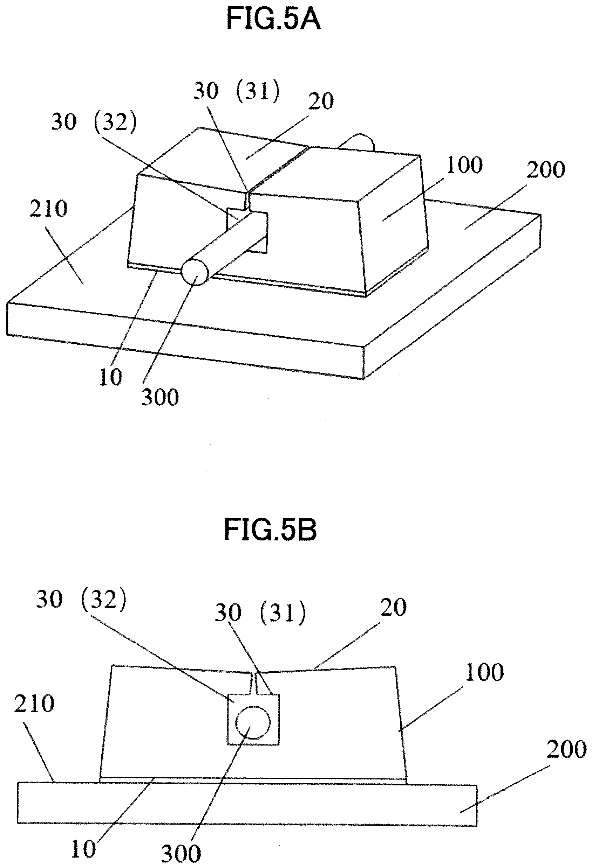

Next, referring to FIGS. 3A to 5B, a holder according to another embodiment and its modification, and a case where the holder is mounted on a member while holding an object will be described. FIG. 3A is a perspective view showing a holder 100a according to another embodiment of the present disclosure. FIG. 3B is a front view showing the holder 100a according to the another embodiment of the present disclosure. FIG. 4A is a perspective view showing the holder 100a mounted on a member 200 while holding a cable 300, which is an object being held, according to the another embodiment of the present disclosure. FIG. 4B is a front view showing the holder 100a mounted on the member 200 while holding the cable 300, which is the object being held, according to the another embodiment of the present disclosure. FIG. 5A is a perspective view showing a holder 100a mounted on a member 200 while holding a cable 300, which is an object being held, according to a modification of the another embodiment of the present disclosure. FIG. 5B is a front view showing the holder 100a mounted on the member 200 while holding the cable 300, which is the object being held, according to the modification of the another embodiment of the present disclosure.

The holder 100a of the another embodiment differs from the holder 100 of the embodiment only in the groove 30. Here, the description focuses on the groove 30, and detailed descriptions of components identical to those in the embodiment are omitted.

In the holder 100a of the another embodiment of the present disclosure, the groove 30 includes a first groove 31 and a second groove 32. The second groove 32 communicates with the first groove 31, is located between the first groove 31 and the first surface 10. The second groove 32 is configured to accommodate the object held by the holder 100a. As shown in FIGs. 3A and 3B, a width of the second groove 32 is greater than or equal to a width of the first groove 31. Here, the width of the first groove 31 refers to a maximum size of the first groove 31 in the longitudinal direction of the holder 100a. The width of the second groove refers to a maximum size of the second groove 32 in the longitudinal direction of the holder 100a.

In this way, in the holder 100a of the another embodiment, similarly to the holder 100 of the embodiment, compared to before the first surface 10 is attached on the mounting surface 210 as shown in FIGs. 3A and 3B, after the first surface 10 of the holder 100a holding the cable 300 is attached on the mounting surface 210 of the member 200 as shown in FIGs. 4A and 4B, the first surface 10 deforms, thus the size of the opening of the first groove 31 on the second surface 20 becomes smaller. Specifically, in the another embodiment, the size of the opening of the first groove 31 decreases to zero, namely, the opening of the first groove 31 is closed. Thus, the opening of the first groove 31 is closed, thereby blocking the path of the cable 300 falling out of the groove 30 formed by the first groove 31 and the second groove 32, and generating the elastic compressive force due to elastic deformation. Furthermore, the second groove 32 accommodates the cable 300, so that the holder 100a can hold the cable 300, which is the object to be held, more reliably and firmly.

### (Modification)

Furthermore, as a modification of the another embodiment, as shown in FIGs. 5A and 5B, the width of the second groove 32 is greater than or equal to the width of the first groove 31, and the width of the second groove 32 is greater than or equal to the width of the object being held. Here, the width of the object being held refers to a maximum size of the object being held in the longitudinal direction of the holder 100a. Here, as shown in FIGs. 5A and 5B, the width of the object being held refers to a maximum size, i.e., a diameter, of the cable 300 in the longitudinal direction of the holder 100a.

In this way, in the holder 100a of the modification of the another embodiment, similar to the holder 100 in the embodiment, compared to before the first surface 10 is attached on the mounting surface 210 as shown in FIGs. 3A and 3B, after the first surface 10 of the holder 100a holding the cable 300 is attached on the mounting surface 210 of the member 200 as shown in FIGs. 5A and 5B, the first surface 10 deforms, thus the size of the opening of the first groove 31 on the second surface 20 becomes smaller. Thus, the opening of the first groove 31 is much smaller than the diameter of the cable 300, thereby blocking the path of the cable 300 falling out of the groove 30 formed by the first groove 31 and the second groove 32, and generating the elastic compressive force due to elastic deformation. Furthermore, the second groove 32 accommodates the cable 300 without generating a compressive force on the cable 300. Thus, the holder 100a of the modification can hold the cable 300, which is the object to be held, more reliably and firmly.

Furthermore, in the holder 100a of the modification, the width of the first groove 31 is smaller than the width of the object to be held.

Therefore, in addition to possessing the technical effects of the above embodiments, the width of the first groove 31 is smaller than the width of the object to be held. In this way, both before the first surface 10 is attached on the mounting surface 210, and after the first surface 10 of the holder 100a holding the cable 300 is attached on the mounting surface 210 of the member 200, the width of the first groove 31 is always smaller than the width of the cable 300, which is the object being held. Thus, the first groove 31 always blocks the path of the cable 300 falling out of the groove 30, so that it difficult for the cable 300 to fall out of the holder.

### (Another Modification)

In the above embodiments, the case where the first surface 10 of the holder is the concave surface and the mounting surface of the member 200 is the flat surface is used as an example, but it is not limited to the case. The first surface 10 of the holder and the mounting surface 210 of the member 200 may be configured such that, compared to before attaching the first surface 10 on the mounting surface 210, after attaching the first surface 10 on the mounting surface 210, the first surface 10 deforms, and the size of the opening of the groove 30 on the second surface 20 becomes smaller.

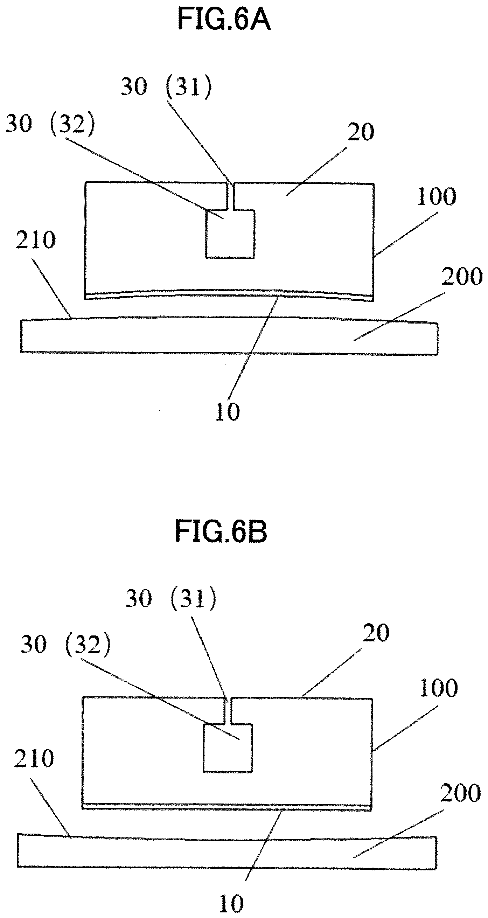

For example, as a modification, as shown in FIG. 6A, the first surface 10 of the holder 100 may be a concave surface, the mounting surface 210 of the member 200 may be a convex surface, and curvature of the first surface 10 is greater than curvature of the mounting surface 210.

Alternatively, as another modification, as shown in FIG. 6B, the first surface 10 of the holder 100 may be a flat surface, and the mounting surface 210 of the member 200 may be a concave surface.

Furthermore, the shape of the groove in the holder is not limited to the shapes described in the above embodiments. Various modifications may be made according to the shape of the object or actual needs.

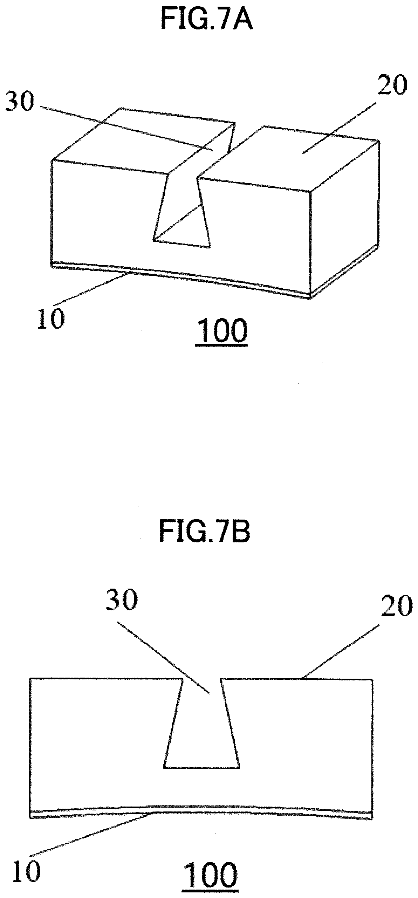

For example, as a modification of the groove 30 of the holder 100 in the embodiment, as shown in FIGS. 7A and 7B, the groove 30 may be a trapezoidal shape in the front view.

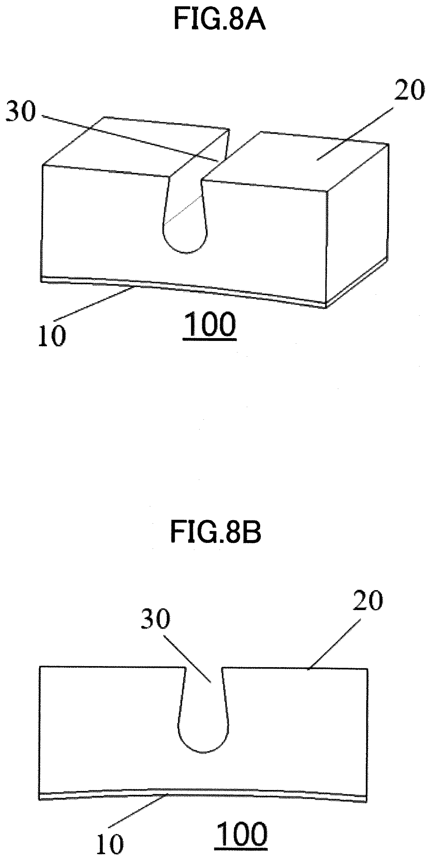

Alternatively, as another modification of the groove 30 of the holder 100 in the embodiment, as shown in FIGS. 8A and 8B, the groove 30 may be a drop shape in the front view.

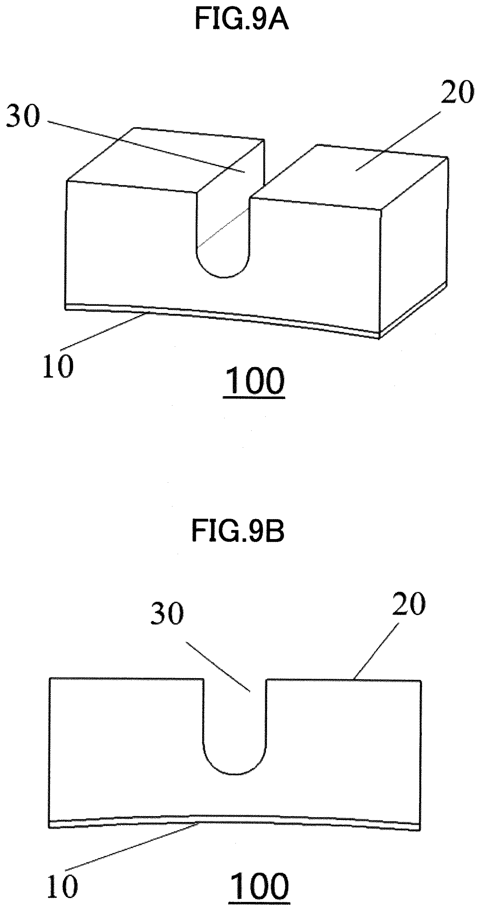

Alternatively, as another modification of the groove 30 of the holder 100 in the embodiment, as shown in FIGs. 9A and 9B, the groove 30 may be a combined shape of a rectangular shape and a semi-circular shape in the front view.

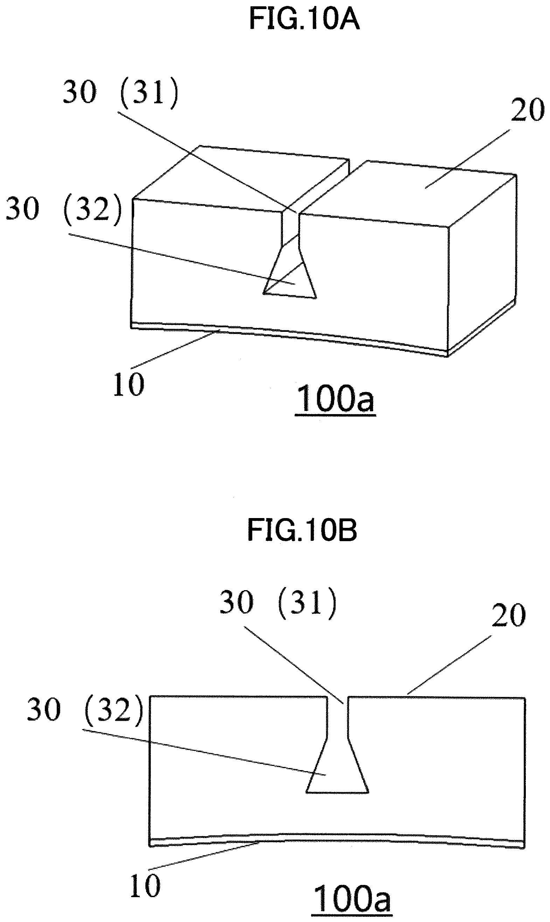

Alternatively, as a modification of the groove 30 of the holder 100a in the another embodiment, as shown in FIGs. 10A and 10B, the first groove 31 may be a rectangular shape in the front view, and the second groove 32 may be a trapezoidal shape in the front view.

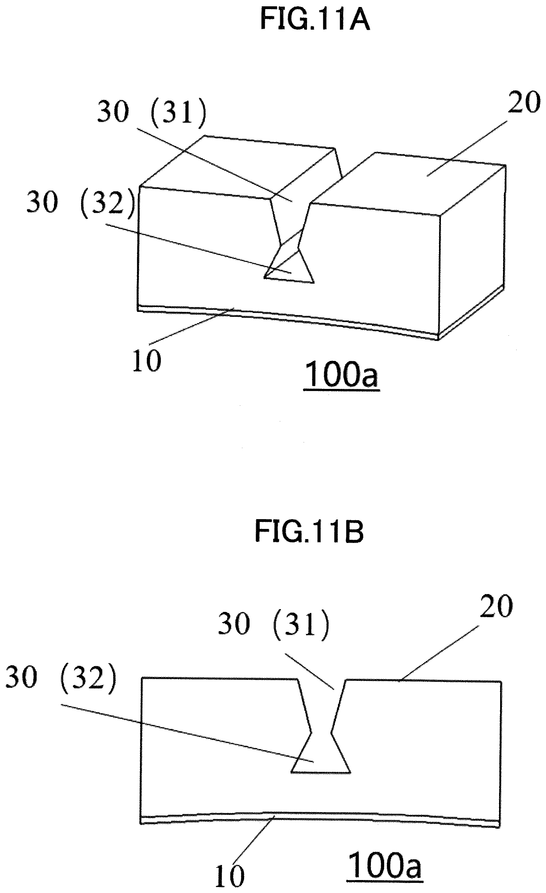

Alternatively, as another modification of the groove 30 of the holder 100a in the another embodiment, as shown in FIGs. 11A and 11B, the first groove 31 may be an inverted trapezoidal shape in the front view, and the second groove 32 may be a trapezoidal shape in the front view.

All of the above modifications possess the technical effects of the embodiment, the another embodiment, and the modifications of the another embodiment described above.

In addition, in the embodiment, the another embodiment, and the modifications of the another embodiment, examples were described using the case where one groove is formed on the second surface 20 of the holder, but the present disclosure is not limited to the examples.

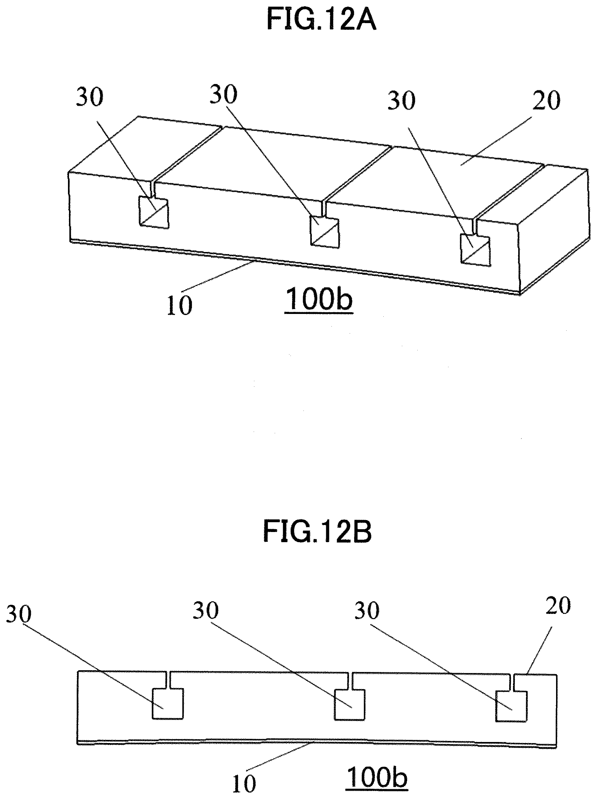

For example, as another modification of the holder, a holder 100b may have three grooves 30 formed on the second surface 20, as shown in FIGs. 12A and 12B. However, the present disclosure is not limited to the modification, and any number of grooves 30 may be formed on the second surface 20 of the holder 100b. Therefore, in addition to possessing the technical effects of the embodiment, the another embodiment, and their modifications described above, a plurality of objects can be reliably held using a single holder.

Furthermore, FIGs. 12A and 12B show a case where the three grooves 30 formed on the second surface 20 of the holder 100b have the same width, but the present disclosure is not limited to the case. Any number of grooves 30 formed on the second surface 20 of the holder 100b may be different or partially different. Therefore, in addition to possessing the technical effects of the embodiment, the another embodiment, and their modifications described above, a plurality of objects with different shapes, sizes, or specifications can be reliably held using a single holder.

Furthermore, in the embodiment, the case with grooves 30 was described, and in the another embodiment, the case where grooves 30 are formed by a first groove 31 and a second groove 32 was described. However, the groove 30 in the embodiment may also include the first groove 31 and the second groove 32. Furthermore, the groove 30 of the present disclosure may be further divided into multiple levels, such as a first groove, a second groove, ..., an n-th groove (n is an integer greater than 2), as needed, to adapt to the shape of the object being held, the reliability of the holding, and the ease of mounting or demounting the object.

Furthermore, the concept of present disclosure is embodied as the holder, but the concept of the present disclosure is not limited to the holder. The concept of present disclosure may also be embodied as an electronic component. The electronic component includes the holder described above, and the member having the mounting surface on which the holder is mounted.

Embodiments and modifications of present disclosure have been described above, but these embodiments are only provided as examples and are not intended to limit the scope of the present disclosure. These new embodiments may be implemented in various other ways, and various omissions, substitutions, and modifications may be made without departing from the spirit of present disclosure. These embodiments and modifications are included within the scope of the claims.

## Claims

1. A holder formed of an elastic material and being configured to hold an object, the holder comprising:
a first surface configured to mount the holder onto a mounting surface of a member; and
a second surface opposite the first surface,
wherein at least one groove configured to hold the object is formed on the second surface, and
the holder is configured such that a size of an opening of the groove on the second surface becomes smaller, as the first surface deforms.

2. The holder as claimed in claim 1,
wherein the first surface deforms after the first surface is attached on the mounting surface of the member compared to before the first surface is attached on the mounting surface.

3. The holder as claimed in claim 1 or 2,
wherein the size of the opening of the groove on the second surface becomes smaller than a width of the object, as the first surface deforms after the first surface is attached on the mounting surface of the member compared to before the first surface is attached on the mounting surface.

4. The holder as claimed in one of claims 1-
3,
wherein the first surface is a concave surface, and curvature of the first surface becomes smaller after the first surface is attached on the mounting surface compared to before the first surface is attached on the mounting surface.

5. The holder as claimed in one of claims 1-
4,
wherein the groove includes a first groove; and a second groove communicating with the first groove, being located between the first groove and the first surface, and being configured to accommodate the object held by the holder.

6. The holder as claimed in claim 5,
wherein a width of the second groove is greater than or equal to a width of the first groove.

7. The holder as claimed in claim 5,
wherein a width of the second groove is greater than or equal to a width of the first groove, and the width of the second groove is greater than or equal to a width of the object.

8. The holder as claimed in claim 7,
wherein the width of the first groove is less than the width of the object.

9. The holder as claimed in one of claims 1-8,
wherein the at least one groove includes two or more grooves provided on the second surface, and
widths of the two or more grooves are different.

10. An electronic component, comprising:
the holder as claimed in one of claims 1-9; and
the member having the mounting surface on which the holder is mounted.
